# EUROPÄISCHE PATENTSCHRIFT

(11) **EP 2 877 796 B1**
(45) Veröffentlichungstag und Bekanntmachung des Hinweises auf die Patenterteilung: **14.12.2016**
(21) Anmeldenummer: 13741694.7
(22) Anmeldetag: 15.07.2013
(51) Int. Cl.: F27B 3/28, F27D 11/10, H05B 7/102

(54) **VORRICHTUNG UND VERFAHREN ZUM NACHSETZEN EINER ELEKTRODE FÜR EINEN METALLURGISCHEN OFEN**
DEVICE AND METHOD FOR REPLENISHING AN ELECTRODE FOR A METALLURGICAL FURNACE
DISPOSITIF ET PROCÉDÉ DE RÉAJUSTEMENT D'UNE ÉLECTRODE POUR UN FOUR MÉTALLURGIQUE

(30) Priorität: 27.07.2012 DE 102012014822; 27.12.2012 DE 102012224470
(43) Veröffentlichungstag der Anmeldung: 03.06.2015
(73) Patentinhaber: SMS group GmbH, 40237 Düsseldorf (DE)
(72) Erfinder: KÖNIG, Roland, 45472 Mülheim a. d. Ruhr (DE); HAAKS, Andreas, 47495 Rheinberg (DE); KLEIN, Christoph, 45359 Essen (DE); KEMPE, Christian, 47169 Duisburg (DE); PASCH, Thomas, 40699 Erkrath (DE)
(74) Vertreter: Klüppel, Walter
(86) Internationale Anmeldenummer: PCT/EP2013/064890
(87) Internationale Veröffentlichungsnummer: WO 2014/016151

(56) Entgegenhaltungen:
- DE-A1- 10 356 400
- DE-A1-102006 000 737

## Beschreibung

Die Erfindung betrifft eine Vorrichtung zum Nachsetzen einer Elektrode eines metallurgischen Ofens, und ein entsprechendes Verfahren für ein solches Nachsetzen. Des Weiteren betrifft die Erfindung eine Elektrode für einen metallurgischen Ofen, die für die Vorrichtung und das Verfahren gemäß der Erfindung geeignet ist.

Bei Lichtbogenöfen und Elektro-Reduktionsöfen, insbesondere bei Gleichstrom-Öfen, unterliegen die Elektroden an ihrer Elektrodenspitze einem ständigen Verbrauch und müssen deshalb während des Betriebs des Lichtbogenofens nachgesetzt werden. Hierzu sind im Stand der Technik Nachsetzvorrichtungen bekannt, z. B. aus DE 43 42 511 A1, WO 2004/110 194 A1, DE 10 2006 000737 A1 oder auch EP 1 969 902 B1. Diese Nachsetzvorrichtungen weisen zumindest einen Klemmring auf, der um die Elektrode zum Halten verspannt werden kann. Der Klemmring ist durch Hydraulikzylinder relativ zum Ofendeckel verfahrbar. Die Elektrode kann in den Ofen hinein nachgesetzt werden, wenn sie von dem Klemmring gehalten wird und dieser mittels der Hydraulikzylinder in Richtung des Ofendeckels verfahren wird. Bei Lichtbogenöfen können Elektroden aus mehreren Elektrodenteilen bzw. - teilstücken bestehen, wie in DE 103 56 400 A1 beschrieben, die der Länge nach miteinander verbunden sind. Die einzelnen Elektrodenteile können durch eine Verschraubung miteinander verbunden sein. Da sich geringfügige Toleranzen im Bereich einer Verbindungsstelle zwischen zwei Elektrodenteilen bzw. der entsprechenden Verschraubungsstelle nicht ganz vermeiden lassen, ergibt sich an dieser Verbindungsstelle ein geringfügiger axialer Versatz zwischen den miteinander verbundenen Elektrodenteilen.

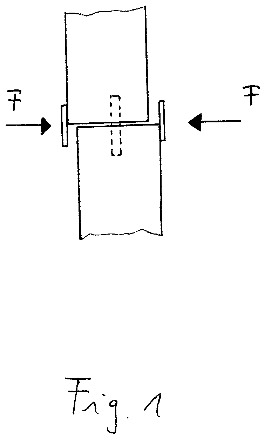

In Fig. 1 ist schematisch stark vereinfacht eine Elektrode mit einem axialen Versatz an einer Verbindungsstelle zwischen aneinander angrenzenden Elektrodenteilen dargestellt. Falls ein Klemmring die Elektrode im Bereich der Verbindungsstelle zwischen den Elektrodenteilen mit einer Kraft F radial verspannt, wird diese Verbindungsstelle nachteiligen Scherbelastungen unterworfen. Dies kann insbesondere bei langen oder schweren Elektroden zu einer unmittelbaren oder aber zeitversetzten Schädigung führen, oder gar einen Bruch der Elektrode herbeiführen. Ein möglicher Elektrodenbruch führt zu einer Betriebsstörung und nachteiliger Betriebsunterbrechung mit entsprechenden Kosten.

Bei herkömmlich bekannten Nachsetzvorrichtungen wird nur vereinzelt und manuell darauf geachtet, dass die Elektrode beim Nachsetzen nicht im Bereich der Verbindungsstelle zwischen zwei Elektrodenteilen geklemmt wird, was nachteilig für die Betriebssicherheit ist.

Der Erfindung liegt daher die Aufgabe zugrunde, ein Nachsetzen der Elektrode eines metallurgischen Ofens zu ermöglichen, ohne dass dabei ein sensibler Längenabschnitt der Elektrode in Form einer Verbindungsstelle zwischen zwei Elektrodenteilen geschädigt wird.

Diese Aufgabe wird durch eine Vorrichtung mit den Merkmalen von Anspruch 1, durch eine Elektrode mit den Merkmalen von Anspruch 12 und durch ein Verfahren mit den Merkmalen von Anspruch 15 gelöst. Vorteilhafte Weiterbildungen der Erfindung sind in den abhängigen Ansprüchen definiert.

Der Erfindung liegt die wesentliche Erkenntnis zugrunde, dass bei einer Klemmringeinrichtung, die einen ersten oberen Klemmring und einen zweiten unteren Klemmring umfasst, ein Ausgleichshub von Verstellzylindern zum Verfahren bzw. Bewegen eines ersten oberen Klemmrings relativ zu einem zweiten unteren Klemmring variabel und automatisiert derart eingestellt werden kann, dass der erste Klemmring nach Erreichen des Ausgleichshubs nicht innerhalb eines sensiblen Längenabschnitts der Elektrode, der durch eine Verbindungsstelle zwischen zwei Elektrodenteilen gebildet sein kann, positioniert wird. Hierdurch ist entsprechend sichergestellt, dass zumindest der erste obere Klemmring zum Halten der Elektrode nicht um ihren sensiblen Längenabschnitt, sondern ausschließlich in Bereichen angrenzend dazu verspannt wird. Eine erfindungsgemäße Vorrichtung weist hierzu eine Steuereinrichtung auf, mittels der sowohl der erste obere und der zweite untere Klemmring als auch die Verstellzylinder geeignet angesteuert werden können, wobei diese Steuereinrichtung zur Vornahme des erläuterten Ausgleichshubs entsprechend programmtechnisch eingerichtet ist.

In vorteilhafter Weiterbildung der Erfindung kann zumindest der erste obere Klemmring mit einer Sensoreinrichtung versehen sein, mittels der an der Elektrode vorgesehene Markierungen, die den sensiblen Längenabschnitt der Elektrode im Bereich ihrer Verbindungsstelle zwischen zwei Elektrodenteilen kennzeichnen, detektiert werden können. Auf Grundlage der Signale der Sensoreinrichtung, die beim Detektieren der Markierungen erzeugt werden, kann das Verfahren bzw. Bewegen des ersten oberen Klemmrings relativ zum zweiten unteren Klemmring durch die Steuereinrichtung um den Ausgleichshub automatisch geregelt wird. Hierbei erfolgt die Ansteuerung der Verstellzylinder zum Verfahren des ersten Klemmrings relativ zum zweiten Klemmring automatisch in Abhängigkeit der an der Elektrode detektierten Markierungen. Der erste obere Klemmring wird relativ zur Elektrode stets so verfahren, dass er den sensiblen Längenabschnitt einer Elektrode übergreift und vor einem erneuten Verspannen der Elektrode nicht im Bereich ihres sensiblen Längenabschnitts positioniert ist.

Durch die vorliegende Erfindung ist sichergestellt, dass bei geringem Aufwand weniger oder gar keine Elektrodenbrüche beim Betrieb eines Lichtbogenofens auftreten. Entsprechend resultiert daraus eine höhere Betriebssicherheit und eine größere Verfügbarkeit, in Verbindung mit einer Entlastung des Bedienpersonals. Das Nachsetzen einer Elektrode kann auch bei eingeschaltetem Ofen erfolgen, weil es sich um einen automatisierten Ablauf handelt. Entsprechend ist ein Elektrodennachsetzen auch unter Volllaststrom möglich.

Ausführungsbeispiele der Erfindung werden nachstehend anhand von schematisch vereinfachten Zeichnungen näher beschrieben. Es zeigen:
- Fig. 1: eine vereinfachte Darstellung eines Teilbereichs einer herkömmlichen Elektrode für einen Lichtbogenofen, in Wechselwirkung mit einem Klemmring einer Nachsetzvorrichtung,
- Fig. 2: eine Seitenansicht einer erfindungsgemäßen Vorrichtung,
- Fig. 3: eine vereinfachte Seitenansicht eines Klemmrings der Vorrichtung von Figur 2,
- Fig. 4, 5: Seitenansichten eines Teilbereichs einer erfindungsgemäßen Elektrode während bzw. nach einem Montagevorgang zum Verbinden von zwei Elektrodenteilen,
- Fig. 6: eine vereinfachte schematische Darstellung eines vertikalen Arbeitsbereichs für einen Regulierzylinder der Vorrichtung gemäß Fig. 2,
- Fig. 7: eine Seitenansicht einer erfindungsgemäßen Nachsetzvorrichtung nach einer weiteren Ausführungsform,
- Fig. 8, 9: Seitenansichten eines Teilbereichs einer erfindungsgemäßen Elektrode nach einer alternativen Ausführungsform während bzw. nach dem Montagevorgang zum Verbinden von zwei aneinander angrenzenden Elektrodenteilen,
- Fig. 10: eine vereinfachte Seitenansicht eines Klemmrings der Vorrichtung von Figur 2 nach einer weiteren Ausführungsform der Erfindung, und
- Fig. 11: eine Seitenansicht eines Teilbereichs einer Elektrode nach einer weiteren Ausführungsform der Erfindung.

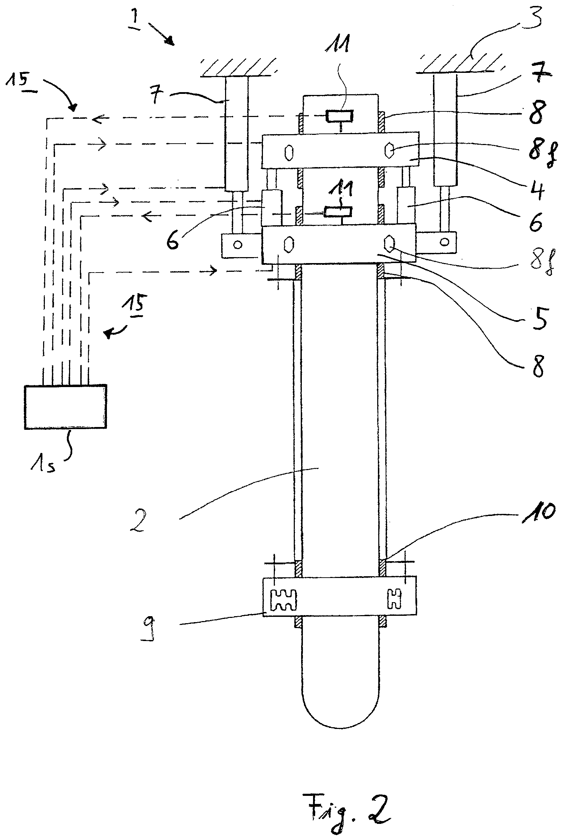

In Fig. 2 ist eine erfindungsgemäße Nachsetzvorrichtung 1 vereinfacht in einer Seitenansicht dargestellt, mit der eine Elektrode 2 für einen Lichtbogenofen relativ zum Ofen verstellt bzw. in den Ofen hinein nachgesetzt werden kann. Die Nachsetzvorrichtung 1 ist hängend ausgebildet und an einer Ofenbühne 3 oder einer entsprechenden Rahmeneinrichtung angebracht. Die Nachsetzvorrichtung 1 umfasst im Einzelnen einen ersten oberen Klemmring 4 und einen zweiten unteren Klemmring 5, die jeweils die Elektrode 2 umschließen. Am zweiten Klemmring 5 sind hydraulisch betätigte Hubzylinder 6 angebracht, wobei die Enden der Kolben dieser Hubzylinder 6 jeweils mit dem ersten Klemmring 4 verbunden sind. Entsprechend lässt sich der erste obere Klemmring 4 mittels der Hubzylinder 6 relativ zu dem zweiten unteren Klemmring 5 verfahren, was nachstehend noch erläutert ist.

An der Ofenbühne 3 sind hängend hydraulisch betätigte Regulierzylinder 7 angebracht, wobei die Enden der Kolben dieser Regulierzylinder 7 mit dem zweiten unteren Klemmring 5 verbunden sind. Entsprechend kann der zweite Klemmring 5 durch eine Betätigung der Regulierzylinder 7 translatorisch in vertikaler Richtung bewegt werden, in Richtung zu einem (in Fig. 2 nicht gezeigten) Ofendeckel oder weg davon.

Der erste Klemmring 4 und der zweite Klemmring 5 sind jeweils mit Druckbacken 8 versehen, die mittels einer Feder 8f in Richtung bzw. gegen die Elektrode 2 gedrückt werden, um diese zu halten. In dieser Weise werden der erste Klemmring 4 und der zweite Klemmring 5 um die Elektrode 2 verspannt, so dass eine Relativbewegung zwischen den Klemmringen 4, 5 und der Elektrode 2 nicht möglich ist. Für ein Lösen der Klemmringe 4, 5 von der Elektrode 2 können die Druckbacken 8 hydraulisch radial nach außen beaufschlagt werden, so dass dann eine Relativbewegung zwischen der Elektrode 2 und einem jeweiligen Klemmring 4, 5 möglich ist.

Bei der in Fig. 2 gezeigten Ausführungsform ist ein Fassungsring 9 mit zumindest einer Kontaktbacke 10 vorgesehen. Die Kontaktbacke 10 wird geeignet gegen die Elektrode 2 gedrückt, um einen konstanten Stromübergang zu gewährleisten.

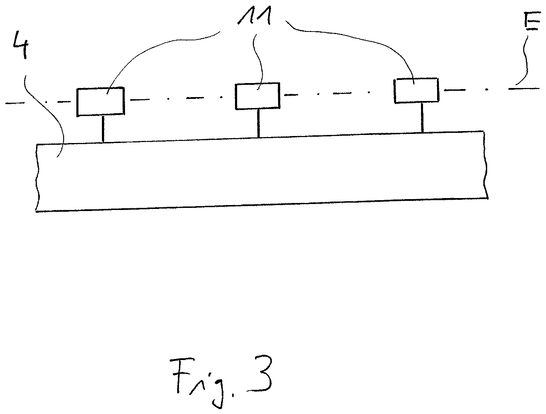

Zumindest an dem ersten oberen Klemmring 4 kann eine Sensoreinrichtung 11 vorgesehen sein, was in der Seitenansicht von Fig. 3 im Detail stark vereinfacht dargestellt ist. An einem oberen Rand des ersten Klemmrings 4 können drei Sensoreinrichtungen 11 durch geeignete Halterungen angebracht sein. Die Sensoreinrichtungen 11 sind an dem ersten Klemmring 4 derart angebracht, dass sie gemeinsam in einer virtuellen horizontalen Ebene E liegen. In Zusammenschau mit der Fig. 2 wird darauf hingewiesen, dass diese Ebene E quer bzw. senkrecht zur Längsachse der Elektrode 2 ist. Bei der Fig. 3 handelt es sich um eine abgewickelte Darstellung, wobei die drei Sensoreinrichtungen 11 in gleichmäßigem Abstand zueinander an dem ringförmigen erste Klemmring 4 angebracht sind. Es können auch mehr oder weniger als drei Sensoreinrichtungen 11 an dem ersten Klemmring 4 angebracht sein, letzterenfalls vorzugsweise in gleichmäßigem Abstand zueinander.

Alternativ zur Darstellung gemäß Fig. 3 können die Sensoreinrichtungen 11 auch im Bereich einer Innenumfangsfläche des Klemmrings 4 angeordnet sein.

Die Sensoreinrichtungen 11 sind mit einer Steuereinrichtung 1 s verbunden, mit der die unter Bezugnahme auf die Fig. 2 genannten hydraulischen Komponenten der Vorrichtung 1 angesteuert werden können. Die Steuereinrichtung 1 s ist in der Fig. 2 symbolisch durch ein Rechteck und insoweit nur stark vereinfacht dargestellt. Die einzelnen Datenverbindungen zwischen der Steuereinrichtung 1 s und den jeweiligen Sensoren 11 bzw. hydraulischen Aggregaten 6, 7, die von der Steuereinrichtung 1s ausgelesen bzw. angesteuert werden können, sind in der Fig. 2 mit gestrichelten Linien 15 angedeutet. Diese Datenverbindungen 15 können beispielsweise durch Kabelstrecken oder durch Funkstrecken realisiert sein.

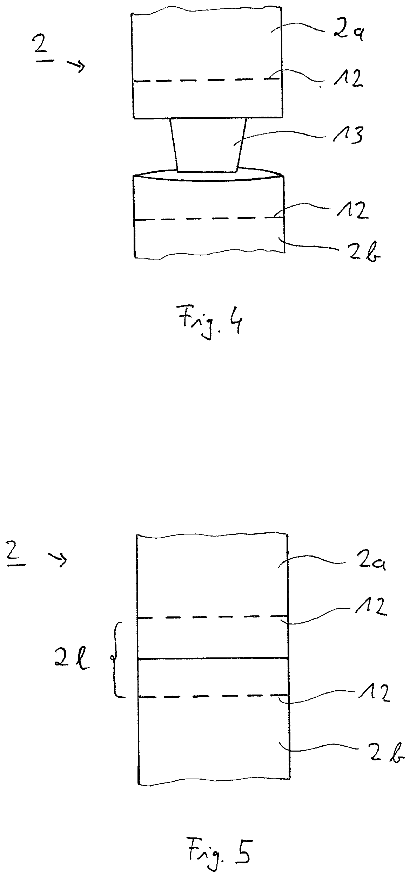

Die vorstehend genannten Sensoreinrichtungen 11 haben den Zweck, dass damit Markierungen 12 detektiert werden, die an der Elektrode 2 vorgesehen sind. In den Darstellungen der Fig. 4 und 5 sind diese Markierungen 12 vereinfacht dargestellt und nachstehend erläutert.

Die Elektrode 2 besteht in ihrer Längsrichtung aus einer Mehrzahl von Elektrodenteilen, die an ihren jeweiligen Stirnseiten miteinander verbunden sind. In der Fig. 4 sind zwei solcher Elektrodenteile 2a, 2b dargestellt, bevor sie mittels einer Verschraubung 13 miteinander verbunden werden. Angrenzend zu ihren Stirnseiten sind die Elektrodenteile 2a, 2b jeweils mit einer Markierung 12 versehen, die quer zur Längsseite der Elektrode 2 verläuft und z.B. aus einem lumineszierenden Farbband oder dergleichen bestehen kann. In Fig. 5 sind die Elektrodenteile 2a, 2b in ihrem zusammengefügten Zustand gezeigt. Die beiden Markierungen 12 definieren bzw. kennzeichnen in Längsrichtung der Elektrode 2 einen sensiblen Längenabschnitt 2l, dessen axiale Länge durch die geschraubte Verbindungsstelle zwischen den beiden Elektrodenteilen 2a, 2b definiert ist.

Beim Betrieb eines Lichtbogenofens wird ein Abbrennen bzw. ein Verbrauchen der Elektrode 2 dadurch kompensiert, dass sie in Richtung des Ofendeckels nachgestellt wird. Dies kann mittels der Regulierzylinder 7 erfolgen, wobei die Elektrode 2 dabei sowohl von dem ersten oberen Klemmring 4 und auch dem zweiten unteren Klemmring 5 gehalten wird.

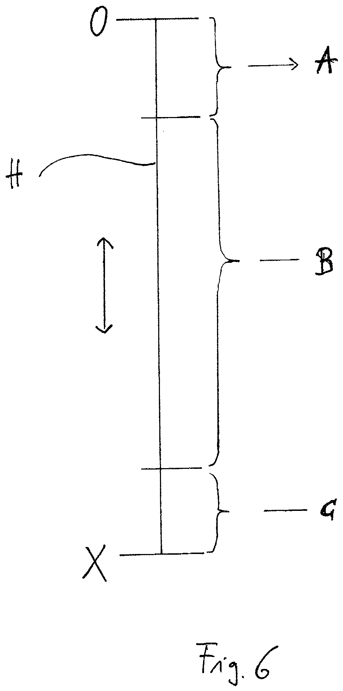

Der gesamte mögliche Arbeitsbereich für die Regulierzylinder 7 ist vereinfacht in der Darstellung von Fig. 6 gezeigt, in der ein vertikaler Hub H für die Regulierzylinder 7 veranschaulicht ist. Mit "0" ist die Position der Kolben der Regulierzylinder 7 in vollständig eingefahrenem Zustand bezeichnet; mit "X" deren Position in vollständig ausgefahrenem Zustand. Der Gesamthub H der Regulierzylinder 7 setzt sich aus drei Teilbereichen zusammen, nämlich den Bereichen A, B und C. Der Teilbereich A entspricht einem Kompensationsbereich, um eine Relativbewegung des Elektrodenstrangs (mit dem ersten und zweiten Klemmring 4, 5) bezüglich der Elektrode 2 auszugleichen. Hierbei entspricht die Länge des Teilbereichs A zumindest einer axialen Länge eines sensiblen Längenabschnitts 2l der Elektrode 2. Der Teilbereich B entspricht einem Arbeitsbereich der Regulierzylinder 7, in dem die Regulierzylinder 7 eingefahren werden, um die Elektrode 2 in Richtung des Ofens nachzusetzen. Der Teilbereich C entspricht einem Reservebereich, z. B. für eventuelle Wartungszwecke oder dergleichen.

Um einer Schädigung der Elektrode 2 vorzubeugen, versteht sich, dass ein Klemmen bzw. Halten der Elektrode 2 an ihren Verbindungsstellen bzw. in einem jeweiligen sensiblen Längenabschnitt 2l durch die Klemmringe 4, 5 zu vermeiden ist. Nachstehend ist erläutert, wie dies beim Nachsetzen der Elektrode 2 realisiert wird.

Das Nachsetzen der Elektrode 2 durch die Regulierzylinder 7 wird durchgeführt, wenn sich der Hub der Regulierzylinder 7 im Teilbereich B befindet. Spätestens dann, wenn die Regulierzylinder 7 einen Hub H erreicht haben, der einer Addition der Strecken der Teilbereiche A und B entspricht, werden die Klemmringe 4, 5 geeignet betätigt, um eine relative Position der Klemmringe 4, 5 bezüglich der Elektrode 2 zu verändern und dabei "frischen Hub" für die Regulierzylinder 7 zu gewinnen. Dies funktioniert im Einzelnen wie folgt:
Durch eine hydraulische Betätigung seiner Druckbacken 8 wird der erste Klemmring 4 von der Elektrode 2 gelöst, wobei anschließend der erste obere Klemmring 4 mittels der Hubzylinder 6 nach oben, d. h. weg von dem zweiten unteren Klemmring 5, verfahren wird. Gleichzeitig wird dabei die Elektrode 2 von dem zweiten unteren Klemmring 5 gehalten. Das genannte Verfahren bzw. Verschieben des ersten Klemmrings 4 weg von dem zweiten Klemmring 5 erfolgt standardmäßig um einen Ausgleichshub mit einem vorbestimmten ersten Wert (z. B. 25 mm). In jedem Fall wird nach dem Verfahren des ersten Klemmrings 4 weg von dem zweiten Klemmring 5 und vor einem erneuten Klemmen bzw. Halten der Elektrode 2 durch den ersten Klemmring 4 durch eine Auswertung der Signale der Sensoreinrichtungen 11 überprüft, ob der erste Klemmring 4 ggf. im Bereich eines sensiblen Längenabschnitts 2l der Elektrode 2 positioniert ist. Ein erneutes Klemmen bzw. Halten der Elektrode 2 durch den ersten Klemmring 4 wird ausschließlich für den Fall eingeleitet, dass der erste Klemmring 4 nach seinem Verfahren weg von dem zweiten Klemmring 5 nicht in dem Bereich eines sensiblen Längenabschnitts 2l der Elektrode 2 positioniert ist.

Falls nach dem Verfahren des ersten Klemmrings 4 weg von dem zweiten Klemmring 5 um den Ausgleichshub mit dem vorbestimmten ersten Wert durch eine Auswertung der Signale der Sensoreinrichtungen 11 festgestellt wird, dass der erste Klemmring 4 nicht in dem Bereich eines sensiblen Längenabschnitts 2l der Elektrode 2 positioniert ist, so wird anschließend die Elektrode 2 erneut durch den ersten oberen Klemmring 4 durch ein Entlasten seiner Druckbacken gehalten, indem deren Gewichtskraft über die Hubzylinder 6, den unteren zweiten Klemmring 5 und die Regulierzylinder 7 in die Ofenbühne 3 eingeleitet wird. Während die Elektrode 2 erneut von dem ersten oberen Klemmring 4 gehalten wird, kann "frischer Hub" für die zu diesem Zeitpunkt weit ausgefahrenen Regulierzylinder 7 dadurch gewonnen werden, dass die Regulierzylinder 7 und die Hubzylinder 6 gleichzeitig und synchron zueinander betätigt bzw. eingefahren werden. Hierzu wird der zweite untere Klemmring 5 durch ein hydraulisches Betätigen seiner Druckbacken 8 von der Elektrode 2 gelöst, so dass eine Relativbewegung des zweiten Klemmrings 5 bezüglich der Elektrode 2 möglich ist. Nun werden die Regulierzylinder 7 eingefahren, wodurch der zweite untere Klemmring 5 absolut gesehen nach oben und in einer Richtung weg vom Ofendeckel bewegt wird. Gleichzeitig werden die Hubzylinder 6 eingefahren, so dass sich der Relativabstand zwischen dem ersten Klemmring 4 und dem zweiten Klemmring 5 verringert. Im Ergebnis bleibt hierbei der erste Klemmring 4 in einer horizontal unveränderten Position, so dass dadurch die Elektrodenposition im Ofen unverändert bleibt und ein konstanter Betriebspunkt der Elektrode 2 gewährleistet ist. Die genannte gleichzeitige Betätigung der Regulierzylinder 7 und der Hubzylinder 6 kann um eine Strecke erfolgen, die dem Ausgleichshub mit dem vorbestimmten ersten Wert entspricht, um den zuvor der erste Klemmring 4 von dem zweiten Klemmring 5 weg bewegt worden war.

Durch das soeben erläuterte gleichzeitige Betätigen der Regulierzylinder 7 und der Hubzylinder 6 findet eine Relativbewegung des Elektrodenstranges bezüglich der Elektrode statt. Ein wesentliches Merkmal besteht diesbezüglich darin, dass die Regulierzylinder 7 - bei der in Fig. 2 gezeigten hängenden Anbringung an der Ofenbühne 3 - eingefahren werden und dadurch "Hub gewinnen". Über die Nachsetzvorrichtung 1 wird also dafür gesorgt, dass die Regulierzylinder 7 beim Betrieb des Ofens ihren vorgesehenen Arbeitsbereich - vorliegend der Teilbereich B - beibehalten.

Wenn genügend Hub für die Regulierzylinder 7 gewonnen worden ist, werden die Druckbacken 8 des zweiten Klemmrings 5 wieder hydraulisch entlastet, so dass dann die Elektrode sowohl von dem ersten Klemmring 4 als auch dem zweiten Klemmring 5 gehalten wird. Bei einem erneuten Elektrodenverbrauch kann dann die Elektrode 2 durch ein Betätigen der Regulierzylinder 7 wieder nach unten, d. h. in Richtung des Ofens bewegt werden.

Falls bei einem Verfahren des ersten oberen Klemmrings 4 weg von dem zweiten unteren Klemmring 5, während die Elektrode 2 von dem zweiten Klemmring 5 gehalten wird, durch die Sensoreinrichtungen 11 eine Markierung 12 an der Elektrode 2 detektiert wird, wird damit erkannt, dass sich der erste obere Klemmring 4 im Bereich des sensiblen Längenabschnitts 2l der Elektrode befindet bzw. in diesen Bereich hineingelangt. Für diesen Fall wird der Ausgleichshub, um den die Hubzylinder 6 für ein Verfahren des ersten Klemmrings 4 weg von dem zweiten Klemmring 5 verstellt werden, auf einen vorbestimmten zweiten Wert eingestellt (z. B. 600 mm). Jedenfalls ist dieser vorbestimmte zweite Wert für den Ausgleichshub ausreichend groß gewählt, dass der erste Klemmring 4 bei der Relativbewegung weg von dem zweiten Klemmring 5 den gesamten sensiblen Längenabschnitt 2l überquert bzw. übergreift und erst jenseits bzw. angrenzend an diesen sensiblen Längenabschnitt 2l bezüglich der Elektrode 2 positioniert wird. Der vorbestimmte zweite Wert für den Ausgleichshub kann im voraus in der Steuereinrichtung 1 s geeignet abgespeichert sein, in Abstimmung mit einem vorbestimmten Elektrodentyp und den zugehörigen Abmessungen des sensiblen Längenabschnitts 2l. Zur Erhöhung der Betriebsicherheit kann ein Ansteuern der Hubzylinder 6 für ein Verfahren des ersten Klemmrings 4 über den sensiblen Längenabschnitt 2l hinweg auch in Abhängigkeit mit einem Detektieren der Markierung 12 an dem nächstfolgenden "frischen" Elektrodenteil 2a erfolgen. Anders ausgedrückt, werden die Hubzylinder 6 während eines Verfahrens des ersten Klemmrings 4 erst dann wieder deaktiviert bzw. "angehalten", wenn von den Sensoreinrichtungen 11 die Markierung 12 an dem nächstfolgenden Elektrodenteil 2a detektiert worden ist.

Nachdem der erste Klemmring 4 um den Ausgleichshub mit dem vorbestimmten zweiten Wert bezüglich des zweiten Klemmrings 5 und über den sensiblen Längenabschnitt 2l der Elektrode 2 hinweg verfahren worden ist, erfolgt anschließend ein erneutes Klemmen bzw. Halten der Elektrode 2 durch den ersten Klemmring 4, gefolgt von einem Lösen des zweiten Klemmrings 5 von der Elektrode 2, und im Anschluss daran ein gleichzeitiges Betätigen bzw. Einfahren der Regulierzylinder 7 und der Hubzylinder 6, um "frischen Hub" für die Regulierzylinder 7 rückzugewinnen. In diesem Zusammenhang versteht sich, dass ein jeweiliges Einfahren bzw. Rückstellen der Regulierzylinder 7 und der Hubzylinder 6 um eine Strecke erfolgt, die dem Ausgleichshub mit dem vorbestimmten zweiten Wert entspricht, um den zuvor der erste Klemmring 4 relativ von dem zweiten Klemmring 5 wegbewegt worden war. Wie erläutert, bleiben durch das synchrone Betätigen der Regulierzylinder 7 und der Hubzylinder 6 die Position der Elektrode 2 innerhalb des Ofens und damit ihr Betriebspunkt im Wesentlichen unverändert.

Die Steuereinrichtung 1s, mittels der die hydraulischen Einheiten 6, 7 angesteuert werden können, ist derart eingerichtet bzw. programmiert, dass eine Betätigung der Hubzylinder 6 für ein Verfahren des ersten Klemmrings 4 relativ zum zweiten Klemmring 5 nur dann möglich ist, wenn der Hub H der Regulierzylinder 7 sich in dem Teilbereich B befindet. Dies hat zur Folge, dass für die Kolben der Regulierzylinder 7 bei einem Einfahren bzw. Rückstellen eine "Hubreserve" besteht, die der Strecke des Teilbereichs A bzw. zumindest einer axialen Länge des sensiblen Längenabschnitts 2l der Elektrode 2 entspricht. Hierdurch ist sichergestellt, dass die Regulierzylinder 7 zur Gewinnung von "frischem Hub" um die Strecke eingefahren werden können, die dem Ausgleichshub des ersten Klemmrings 4 mit dem vorbestimmten zweiten Wert (z. B. 600 mm) entspricht, um den Betriebspunkt der Elektrode 2 konstant zu halten.

Die Ausführungsform gemäß der Darstellung von Fig. 2 hat den Vorteil, dass eine Anpassung des Lichtbogenofens bzw. des zugehörigen Ofendeckels an die Komponenten der erfindungsgemäßen Nachsetzvorrichtung 1 nicht erforderlich ist.

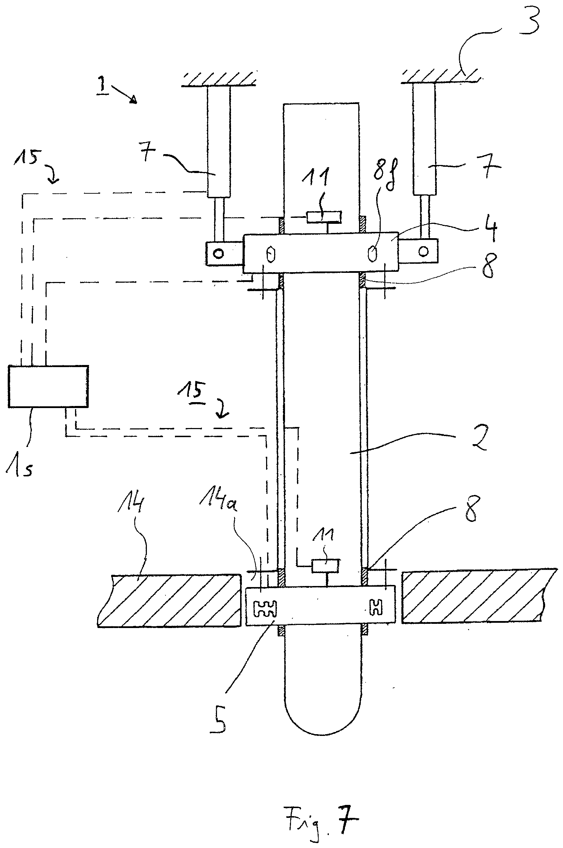

Unter Bezugnahme auf Fig. 7 wird nachstehend eine weitere Ausführungsform der erfindungsgemäßen Nachsetzvorrichtung 1 erläutert.

In Fig. 7 ist eine Seitenansicht der weiteren Ausführungsform der Nachsetzvorrichtung 1 gezeigt. Einander entsprechende Merkmale im Vergleich zur Ausführungsform von Fig. 2 sind hierbei mit gleichen Bezugszeichen versehen.

Die Nachsetzvorrichtung 1 gemäß Fig. 7 umfasst einen oberen ersten Klemmring 4, der durch Regulierzylinder 7 mit einer Ofenbühne 3 oder dergleichen verbunden ist. Die Regulierzylinder 7 sind hängend an der Ofenbühne 3 befestigt, wobei die Enden von deren Kolben außen an dem ersten Klemmring 4 angreifen. An dem ersten Klemmring 4 sind in gleicher Weise Druckbacken 8 vorgesehen, mit denen die Elektrode 2 gehalten werden kann. Durch die Regulierzylinder 7 kann der erste Klemmring 4 vertikal verfahren werden.

In einer Öffnung 14a eines Ofendeckels 14 ist ein zweiter Klemmring 5 vorgesehen, der mit einem unteren Rand des Ofendeckels 14 bündig abschließt. Dieser zweite Klemmring 5 erfüllt eine Doppelfunktion: Einerseits ist hiermit ein Halten der Elektrode 2 möglich, andererseits ist durch eine entsprechend vorgesehene Kontaktbacke 10 eine Stromversorgung für die Elektrode 2 gewährleistet.

Der erste Klemmring 4 der Ausführungsform gemäß Fig. 7 ist in gleicher Weise wie die Ausführungsform gemäß Fig. 2 mit zumindest einer Sensoreinrichtung 11 versehen. Insoweit wird zur Vermeidung von Wiederholungen auf die Erläuterung bezüglich der Fig. 3 verwiesen. Des Weiteren sind die Sensoreinrichtungen 11 und die hydraulischen Einheiten 4, 5 bei der Ausführungsform von Fig. 7- in gleicher Weise wie bei der Fig. 2 - mit einer symbolisch stark vereinfacht gezeigten Steuereinrichtung 1 s signaltechnisch verbunden, was durch die gestrichelten Linien 15 symbolisiert ist. Bezüglich dieser Datenverbindungen 13 darf zur Vermeidung von Wiederholungen auf die Erläuterung zu Fig. 2 verwiesen werden.

Bezüglich der Ausführungsform nach der Fig. 7 wird darauf verwiesen, dass hierfür der in Fig. 6 gezeigte Arbeitsbereich für die Regulierzylinder 7 in gleicher Weise gilt.

Beim Betrieb des Lichtbogenofens wird ein Abbrennen der Elektrode 2 durch ein Ausfahren der Regulierzylinder 7 kompensiert, wodurch die Elektrode 2 in Richtung des Ofendeckels 14 nachgesetzt wird. Hierbei wird die Elektrode 2 von dem ersten Klemmring 4 gehalten, wobei eine Relativbewegung zwischen der Elektrode 2 und dem zweiten Klemmring 5 möglich ist.

Falls der Hub H der Regulierzylinder 7 das Ende des Teilbereichs B (vgl. Fig. 6) erreicht hat, wird die Elektrode 2 vom zweiten Klemmring 5 gehalten, wonach der erste obere Klemmring 4 von der Elektrode 2 gelöst und durch ein Einfahren der Regulierzylinder 7 nach oben, d. h. in einer Richtung weg von dem Ofendeckel 14, verfahren wird. Hierbei kann der erste Klemmring 4 von den Regulierzylindern 7 um einen Ausgleichshub mit einem ersten vorbestimmten Wert verfahren werden, z. B. 25 mm. Ein erneutes Klemmen bzw. Halten der Elektrode 2 durch den ersten Klemmring 4 erfolgt nur dann, wenn durch die Sensoreinrichtungen 11 erkannt wird, dass der erste Klemmring 4 nicht im Bereich eines sensiblen Längenabschnitts 2l der Elektrode 2 positioniert ist.

Falls beim Einfahren der Regulierzylinder 7 durch die Sensoreinrichtungen 11 eine Markierung 12 an der Elektrode 2 detektiert wird, wonach sich der erste Klemmring 4 im Bereich eines sensiblen Längenabschnitts 2l der Elektrode 2 befindet, so werden die Regulierzylinder 7 von der Steuereinrichtung 1s derart angesteuert, dass der Ausgleichshub, um den der erste Klemmring 4 nach oben weg von dem zweiten Klemmring 5 verstellt wird, den größeren vorbestimmten zweiten Wert annimmt, um den erste Klemmring 4 über den sensiblen Längenabschnitt 2l der Elektrode hinweg zu verfahren. Hierdurch ist in gleicher Weise wie bei der Ausführungsform von Fig. 2 erreicht, dass ein erneutes Klemmen der Elektrode 2 durch den ersten Klemmring 4 ausschließlich in einem Bereich außerhalb eines sensiblen Längenabschnitts 2l der Elektrode 2 stattfindet.

Bei der Ausführungsform der Fig. 7 erfüllen die Regulierzylinder 7 eine Mehrfachfunktion, nämlich einerseits ein Nachsetzen der Elektrode 2 in Richtung des Ofendeckels 14, wenn die Elektrode 2 von dem ersten Klemmring 4 gehalten ist. Des Weiteren kann der erste Klemmring 4 durch die Regulierzylinder 7 relativ zum zweiten Klemmring 5 verfahren werden, wenn die Elektrode 2 von dem zweiten Klemmring 5 gehalten wird. Insoweit dienen die Regulierzylinder 7 gleichzeitig als Verstellzylinder zum Verfahren der Elektrode 2 relativ zum Ofendeckel 14 und zum Verfahren des ersten Klemmrings 4 relativ zum zweiten Klemmring 5.

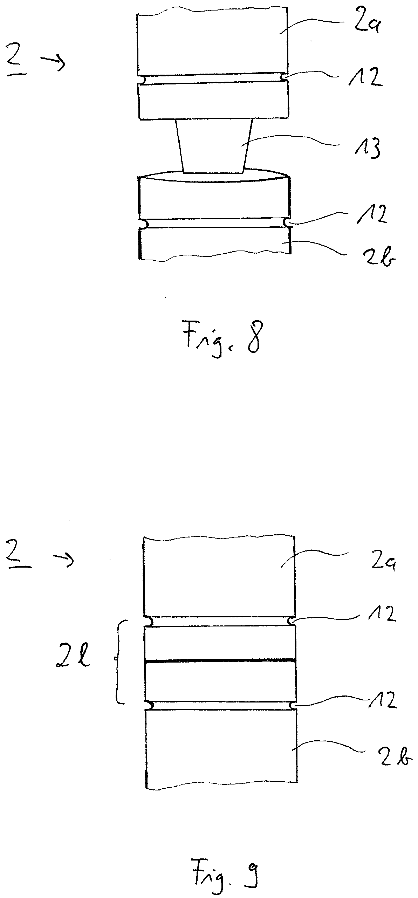

In den Fig. 8 und 9 ist eine alternative Ausgestaltung der Markierungen 12 an der Elektrode 2 vereinfacht gezeigt. Die Fig. 8 und 9 zeigen in gleicher Weise wie die Fig. 4 und 5 zwei aneinander grenzende Elektrodenteile 2a, 2b vor und nach einem Verbinden an ihren gegenüberliegenden Stirnseiten. Bei der Ausführungsform gemäß der Fig. 8 und 9 sind die Markierungen 12 an den Elektrodenteilen 2a, 2b jeweils durch eine Ringnut ausgebildet, die quer zur Längsachse der Elektrode 2 verläuft. Die Position einer solchen Ringnut 12 kann zum Beispiel durch eine Sensoreinrichtung in Form eines Lichtsensor detektiert werden, der Strahlung in Richtung der Elektrode 2 aussendet. Anders ausgedrückt, ist hierbei zumindest an dem oberen ersten Klemmring 3 zumindest ein Lichtsensor angebracht, der Strahlung in Richtung der Elektrode 2 aussendet. Hierbei kann der Lichtsensor die Strahlung auf einen Randbereich der Elektrode 2 ausrichten, so dass die Strahlung durch die Ringnut 12 hindurchtritt, wenn die Ringnut 12 sich in Höhe des Lichtsensors befindet. Für diesen Fall wird dann detektiert, dass der obere Klemmring 4 sich innerhalb des Bereichs des sensiblen Längenabschnitts 2l der Elektrode 2 befindet. Andernfalls, d. h. wenn die Ringnut 12 nicht angrenzend an den Lichtsensor positioniert ist, wird die Strahlung durch die Wandung der Elektrode 2 unterbrochen, was gleichbedeutend damit ist, dass sich der Lichtsensor und damit auch der erste Klemmring 4 an einem unkritischen Abschnitt der Elektrode 2 befinden. Die Ausgestaltung der Markierung 12 in Form der genannten Ringnut hat den Vorteil einer preiswerten Herstellbarkeit und einer Unempfindlichkeit gegen Verschmutzung.

Für die Markierungen 12 an der Elektrode 2 versteht sich, dass die Ausgestaltung in Form eines lumineszierenden Farbbandes (vgl. Fig. 4, 5) auch mit der Ausgestaltung in Form der Ringnut (vgl. Fig. 8, 9) kombiniert werden kann. Ergänzend und/oder alternativ kann die Markierung 12 auch magnetische Eigenschaften aufweisen, die von einer entsprechend angepassten Sensoreinrichtung 11 detektiert werden können.

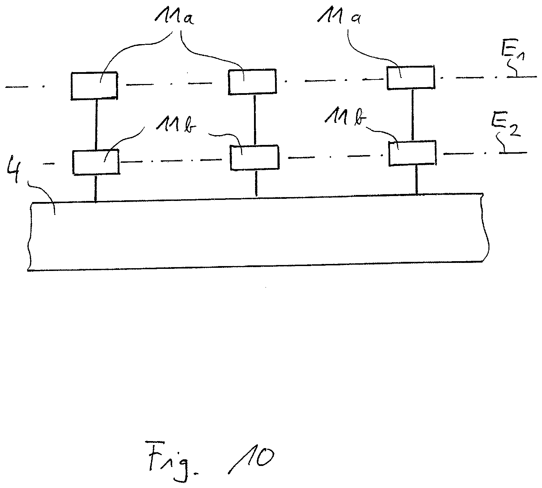

In Fig. 10 ist eine weitere alternative Ausführungsform für die Sensoreinrichtungen 11 an dem oberen Klemmring 4 in einer stark vereinfachten Seitenansicht dargestellt. Die Sensoreinrichtungen 11 sind hierbei in zwei parallel zueinander angeordneten Reihen angeordnet, nämlich in einer oberen Reihe 11a und in einer unteren Reihe 11 b. Die obere Reihe 11 a der Sensoreinrichtungen befindet sich in einer horizontalen Ebene E₁, und die untere Reihe 11 b der Sensoreinrichtungen befindet sich in einer horizontalen Ebene E₂. Die Ebenen E₁ und E₂ sind parallel zueinander und verlaufen jeweils quer zur Längsachse der Elektrode 2. Diesbezüglich versteht sich, dass die Sensoreinrichtungen 11 der beiden Reihen 11 a, 11 b jeweils mit der Steuereinrichtung 1 s signaltechnisch verbunden sind.

In gleicher Weise wie bei Fig. 3 ist die Darstellung von Fig. 10 als Abwicklung zu verstehen, wobei die Sensoreinrichtungen in jeder der beiden Reihen bzw. Ebenen E₁ und E₂ zueinander gleichmäßig beabstandet angeordnet sind. Pro Ebene können auch mehr oder weniger als drei Sensoreinrichtungen 11 a, 11 b vorgesehen sein.

Sobald die obere Reihe 11a der Sensoreinrichtungen eine Markierung 12 an der Elektrode 2 detektiert, kann die Steuereinrichtung 1 s im Hinblick bzw. Vorgriff auf ein notwendiges Verfahren des ersten oberen Klemmrings 4 um einen Ausgleichshub mit dem vorbestimmten zweiten Wert initialisiert werden. Als Ergebnis hiervon können beispielsweise notwendige Hydraulikdrücke für die hydraulischen Aggregate eingestellt bzw. erzeugt werden, insbesondere für die Hubzylinder 6 bei der Ausführungsform gemäß Fig. 2. Sobald die untere Reihe 11 b der Sensoreinrichtungen die Markierung 12 an der Elektrode 2 detektiert, kann das Verfahren des ersten Klemmrings 4 durch die Hubzylinder 6 (bei der Ausführungsform von Fig. 2) bzw. durch die Regulierzylinder 7 (bei der Ausführungsform von Fig. 7) wie erläutert durchgeführt werden, nämlich um einen ausreichend großen Ausgleichshub (mit dem genannten vorbestimmten zweiten Wert), mit dem der erste Klemmring 4 über den sensiblen Längenabschnitt 2l der Elektrode 2 hinaus verschoben wird.

Mit der Anordnung der Sensoreinrichtungen 11a und 11 b gemäß Fig. 10 in den beiden Ebenen E₁ und E₂ ist eine weiter verbesserte Betriebssicherheit bezüglich des Nachsetzens möglich. Dies erfolgt in der Weise, dass ein Detektieren einer Markierung 12 durch die Sensoreinrichtungen 11a in der Steuereinrichtung 1 s gespeichert wird. Falls im Anschluss daran dieselbe Markierung 12 von den Sensoreinrichtungen 11 b nicht in einer vorgegebenen Zeit, die in Wechselwirkung mit einer Geschwindigkeit der Betätigung der hydraulischen Verstellzylinder 6, 7 steht, ebenfalls detektiert wird, so wird dies als Störung erkannt. In Folge dessen wird ein Störungssignal erzeugt und der Nachsetzprozess zu Wartungszwecken vorübergehend unterbrochen.

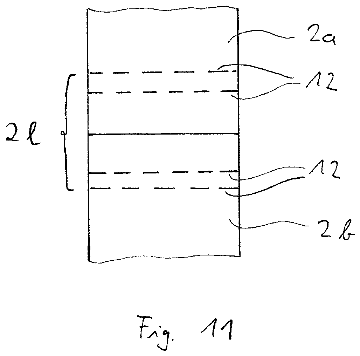

In Fig. 11 ist stark vereinfacht eine weitere Möglichkeit für das Vorsehen von Markierungen 12 an der Elektrode 2 gezeigt. In Fig. 11 sind zwei aneinandergrenzende Elektrodenteile 2a, 2b dargestellt, wenn sie an ihren aneinandergrenzenden Stirnseiten miteinander verbunden sind. Zumindest an der oberen Stirnseite des in Fig. 11 unteren Elektrodenteils 2b sind zwei Reihen von Markierungen 12 ausgebildet, die zueinander parallel und jeweils quer zur Längsachse der Elektrode 2 sind. Das Vorsehen von zwei Reihen von Markierungen 12 hat den Vorteil, dass bei einem Detektieren einer ersten Reihe der Markierungen 12 (in Fig. 11 z. B. die untere Reihe an dem unteren Elektrodenteil 2b) die Steuereinrichtung 1s initialisiert werden kann, wobei bei einem Detektieren der daran angrenzenden weiteren Reihe der Markierungen 12 am gleichen Elektrodenteil (in Beispiel von Fig. 11 die obere Reihe der Markierungen 12 an dem unteren Elektrodenteil 2b) das Verfahren des ersten Klemmrings 4 durch die Hubzylinder 6 bzw. Regulierzylinder 7 durchgeführt wird. Somit erfüllen die zwei Reihen von Markierungen 12 wie in Fig. 11 dargestellt die gleiche Funktion wie die beiden Reihen von Sensoreinrichtungen 11 a, 11 b gemäß Fig. 10, im Sinne eines "Frühwarnsystems". Die zwei Reihen der Markierungen 12 können in gleicher Weise wie bei den vorstehend genannten Ausführungsformen der Erfindung ausgebildet sind, d.h. optisch, magnetisch und/oder durch eine Formgebung der Elektrode an ihrem Randbereich bedingt, z.B. in Form einer Ringnut.

Ergänzend zum ersten Klemmring 4 kann auch der zweite untere Klemmring 5 zumindest eine Sensoreinrichtung 11 aufweisen, die mit der Steuereinrichtung 1s signaltechnisch verbunden ist und mit der eine Markierung 12 an der Elektrode 2 und damit ein sensibler Längenabschnitt 2l der Elektrode 2 detektiert werden kann. In den Fig. 2 und 7 ist dies vereinfacht durch ein Rechteck mit dem Bezugszeichen "11" oberhalb des zweiten Klemmrings 5 symbolisiert. Hierdurch ist sichergestellt, dass der zweite Klemmring 5 die Elektrode 2 nicht in einem Bereich ihres sensiblen Längenabschnitts 2l klemmt. Die Anbringung von zumindest einer Sensoreinrichtung 11 an dem zweiten Klemmring 5 kann in gleicher Weise erfolgen wie an dem ersten Klemmring 4, so dass zur Vermeidung von Wiederholungen auf die Erläuterung bezüglich der Figuren 2 bis 10 verwiesen wird.

Bezüglich der in den Fig. 2 und 7 gezeigten Ausführungsformen versteht sich, dass alternativ der Elektrodenstrang auch in stehender Bauart ausgeführt sein kann, bei der die Regulierzylinder 7 nach unten an einem geeigneten Gerüst oder dergleichen abgestützt sind.

Die Erfindung eignet sich für verschiedene Formen von Elektroden, die bei Lichtbogenöfen bzw. Elektroreduktionsöfen zum Einsatz kommen. Beispielhafte Elektrodentypen sind vorgebackene ("pre-baked") Elektroden (z. B. Graphit- oder Kohleelektroden) oder selbstbackende (Söderberg-) Elektroden. Mit der Erfindung ist außerdem ein sogenanntes "backslippen" möglich, bei dem die Elektrode 2 Stück für Stück aus dem Lichtbogenofen herausgezogen wird. Auch hierbei ist durch die Ansteuerung der hydraulischen Verstellzylinder mittels der Steuereinrichtung 1 s in Abhängigkeit der Signale der Sensoreinrichtungen 11 sichergestellt, dass die Elektrode 2 von den Klemmringen 4, 5 nicht im Bereich ihrer sensiblen Längenabschnitte 2l geklemmt wird.

## Patentansprüche

1. Vorrichtung (1) zum Nachsetzen einer einen sensiblen Längenabschnitt (2l) aufweisenden Elektrode (2) eines metallurgischen Ofens, insbesondere eines Ofens für den Widerstandsbetrieb, mit einem Ofendeckel (14), umfassend
einen ersten oberen Klemmring (4) und einen zweiten unteren Klemmring (5), wobei die Klemmringe (4, 5) zum Halten der Elektrode (2) um diese herum verspannbar und zum Freigeben der Elektrode (2) von dieser lösbar sind,
Verstellzylinder (6, 7) zum Verfahren des ersten Klemmrings (4) relativ zum zweiten Klemmring (5) um einen Ausgleichshub und zum Verfahren der Elektrode (2) relativ zum Ofendeckel (14), und
eine Steuereinrichtung (1s) zum Ansteuern des ersten und zweiten Klemmrings (4, 5) und der Verstellzylinder (6, 7),
**dadurch gekennzeichnet,**
**dass** die Steuereinrichtung (1s) programmtechnisch derart eingerichtet ist, dass der Ausgleichshub für die Verstellzylinder (6, 7) zum Verfahren des ersten Klemmrings (4) relativ zum zweiten Klemmring (5) variabel und automatisiert einstellbar ist, so dass ein erneutes Verspannen des ersten Klemmrings (4) um die Elektrode (2) nach Erreichen des Ausgleichshubs ausschließlich angrenzend an den sensiblen Längenabschnitt (2l) der Elektrode (2) und nicht innerhalb dieses Längenabschnitts (2l) erfolgt.

2. Vorrichtung (1) nach Anspruch 1, **dadurch gekennzeichnet, dass** zumindest der erste Klemmring (4) zumindest eine Sensoreinrichtung (11) aufweist, mit der an der Elektrode (2) vorgesehene Markierungen (12) für den sensiblen Längenabschnitt (2l) der Elektrode (2) detektierbar sind, wobei die Verstellzylinder (6, 7) durch die Steuereinrichtung (1s) zum Ausführen des Ausgleichshubs in Abhängigkeit von Signalen der Sensoreinrichtung (11) regelbar sind.

3. Vorrichtung (1) nach Anspruch 1 oder 2, **dadurch gekennzeichnet, dass** der zweite Klemmring zumindest eine Sensoreinrichtung (11) aufweist, mit der an der Elektrode (2) vorgesehene Markierungen (12) für den sensiblen Längenabschnitt (2l) der Elektrode (2) detektierbar sind, so dass die Steuereinrichtung (1s) den zweiten Klemmring (5) derart ansteuert, dass er die Elektrode (2) ausschließlich angrenzend an den sensiblen Längenabschnitt (2l) der Elektrode (2) und nicht innerhalb dieses Längenabschnitts (2l) hält.

4. Vorrichtung (1) nach Anspruch 2 oder 3, **dadurch gekennzeichnet, dass** die Sensoreinrichtung (11) dazu geeignet ist, eine Markierung (12) an der Elektrode (2) zu detektieren, die optisch und/oder magnetisch ausgebildet ist.

5. Vorrichtung (1) nach einem der Ansprüche 2 bis 4, **dadurch gekennzeichnet, dass** die Sensoreinrichtung (11) dazu geeignet ist, eine Markierung an der Elektrode (2) in Form einer daran ausgebildeten Ringnut (12) zu detektieren.

6. Vorrichtung (1) nach Anspruch 5, **dadurch gekennzeichnet, dass** von der Sensoreinrichtung (11) Strahlung aussendbar ist, die in einer vorbestimmten Position der Elektrode (2) bezüglich des Ofendeckels (14) durch die Ringnut (12) hindurchtritt.

7. Vorrichtung (1) nach einem der Ansprüche 1 bis 6, **dadurch gekennzeichnet, dass** die Verstellzylinder (6, 7) zum Verfahren des ersten Klemmrings (4) um den Ausgleichshub durch die Ansteuerung mittels der Steuereinrichtung (1s) nur unter der Bedingung betätigbar sind, dass die Verstellzylinder (6, 7) über eine vorbestimmte Hubreserve verfügen, die größer als eine axiale Länge des sensiblen Längenabschnitts (2l) der Elektrode (2) ist.

8. Vorrichtung (1) nach einem der Ansprüche 1 bis 7, **dadurch gekennzeichnet, dass** die Verstellzylinder zum Verfahren des ersten Klemmrings (4) relativ zum zweiten Klemmring (5) als Hubzylinder (6) ausgebildet sind, die mit dem ersten Klemmring (4) verbunden und an dem zweiten Klemmring (5) abgestützt sind, und dass die Verstellzylinder zum Verfahren der Elektrode (2) relativ zum Ofendeckel (14) als Regulierzylinder (7) ausgebildet sind, die den zweiten Klemmring (5) mit einer Rahmeneinrichtung (3) oder dergleichen verbinden.

9. Vorrichtung (1) nach Anspruch 8, **dadurch gekennzeichnet, dass** gleichzeitig mit einem Verstellen der Hubzylinder (6) zum Verfahren des um die Elektrode (2) verspannten ersten Klemmrings (4) in Richtung des gelösten zweiten Klemmrings (5) die Regulierzylinder (7) verstellbar sind, so dass ein Abstand des ersten Klemmrings (4) zum Ofendeckel (14) und damit der Betriebspunkt der Elektrode (2) innerhalb des Ofens konstant bleiben.

10. Vorrichtung (1) nach einem der Ansprüche 1 bis 7, **dadurch gekennzeichnet, dass** die Verstellzylinder zum Verfahren des ersten Klemmrings (4) relativ zum zweiten Klemmring (5) und zum Verfahren der Elektrode (2) relativ zum Ofendeckel (14) einstückig als Regulierzylinder (7) ausgebildet sind, die den ersten Klemmring (4) mit einer Rahmeneinrichtung (3) verbinden.

11. Vorrichtung (1) nach einem der Ansprüche 1 bis 10, **dadurch gekennzeichnet, dass** der zweite untere Klemmring (5) feststehend im Ofendeckel (14) oder angrenzend an den Ofendeckel (14) angeordnet ist.

12. Elektrode (2) zur Verwendung bei einem metallurgischen Ofen, die aus einer Mehrzahl von Elektrodenteilen (2a, 2b) besteht, wobei aneinander angrenzende Elektrodenteile (2a, 2b) jeweils durch eine Verbindungsstelle miteinander verbunden sind,
**dadurch gekennzeichnet,**
**dass** an der Elektrode (2) Markierungen (12) vorgesehen sind, die eine jeweilige Verbindungsstelle zwischen zwei aneinander angrenzenden Elektrodenteilen kennzeichnen und diese Verbindungsstelle als sensiblen Längenabschnitt (2l) der Elektrode (2) ausweisen, wobei die Markierungen (12) von einer Sensoreinrichtung einer Vorrichtung (1) zum Nachsetzen der Elektrode (2) detektierbar sind.

13. Elektrode (2) nach Anspruch 12, **dadurch gekennzeichnet, dass** die Markierungen (12) an zumindest einer Seite einer Verbindungsstelle in zwei benachbarten und zueinander parallelen Reihen ausgebildet sind, die jeweils quer zur Längsachse der Elektrode (2) verlaufen.

14. Vorrichtung (1) nach einem der Ansprüche 1 bis 11, zum Nachsetzen einer Elektrode (2) nach einem der Ansprüche 12 oder 13.

15. Verfahren zum Nachsetzen einer Elektrode (2) eines metallurgischen Ofens, insbesondere eines Ofens für den Widerstandsbetrieb, mit einem Ofendeckel (14), unter Verwendung einer Vorrichtung (1) nach einem der Ansprüche 1 bis 11 oder nach Anspruch 14,
**dadurch gekennzeichnet,**
**dass** die Verstellzylinder (6, 7) zum Verfahren des ersten Klemmrings (4) relativ zum zweiten Klemmring (5) in Abhängigkeit des sensiblen Längenabschnitts (2l) der Elektrode (2) derart geregelt werden, dass ein erneutes Verspannen des ersten Klemmrings (4) um die Elektrode (2) nach Erreichen des Ausgleichshubs ausschließlich angrenzend an den sensiblen Längenabschnitt (2l) der Elektrode (2) und nicht innerhalb dieses Längenabschnitts (2l) erfolgt.

16. Verfahren nach Anspruch 15,
**dadurch gekennzeichnet, dass** der sensible Längenabschnitt (2l) der Elektrode (2) mit Markierungen (12) versehen ist, die von einer zumindest an dem ersten Klemmring (4) angebrachten Sensoreinrichtung detektiert werden, wobei die Verstellzylinder (6, 7) zum Verfahren des ersten Klemmrings (4) relativ zum zweiten Klemmring (5) in Abhängigkeit der Signale der Sensoreinrichtung (11) geregelt werden.

17. Verfahren nach Anspruch 15 oder 16,
**dadurch gekennzeichnet, dass** die Verstellzylinder (6, 7) zum Verfahren des ersten Klemmrings (4) relativ zum zweiten Klemmring (5) nur unter der Bedingung betätigt werden, dass die Verstellzylinder (6, 7) über eine vorbestimmte Hubreserve verfügen, die größer als eine axiale Länge des sensiblen Längenabschnitts (2l) der Elektrode (2) ist.

18. Verfahren nach einem der Ansprüche 15 bis 17, **dadurch gekennzeichnet, dass** die Verstellzylinder (6, 7) zum Verfahren des ersten Klemmrings (4) relativ zum zweiten Klemmring (5) betätigt werden, wenn die Verstellzylinder (7) zum Verfahren der Elektrode (2) einen vorbestimmten Hub überschritten haben.

19. Verfahren nach einem der Ansprüche 15 bis 18, **dadurch gekennzeichnet, dass** die Verstellzylinder zum Verfahren des ersten Klemmrings (4) relativ zum zweiten Klemmring (5) als Hubzylinder (6) ausgebildet sind, die mit dem ersten Klemmring (4) verbunden und an dem zweiten Klemmring (5) abgestützt sind, und
dass die Verstellzylinder zum Verfahren der Elektrode (2) relativ zum Ofendeckel (14) als Regulierzylinder (7) ausgebildet sind, die den zweiten Klemmring (5) mit einer Rahmeneinrichtung (3) verbinden,
wobei beim Verstellen der Hubzylinder (6) zum Verfahren des um die Elektrode (2) verspannten ersten Klemmrings (4) in Richtung des gelösten zweiten Klemmrings (5) gleichzeitig die Regulierzylinder (7) verstellt werden, so dass ein Abstand des ersten Klemmrings (4) zum Ofendeckel (14) und damit der Betriebspunkt der Elektrode (2) innerhalb des Ofens konstant bleiben.

## Claims

1. Device (1) for replenishing an electrode (2), which has a sensitive length section (2l), of a metallurgical furnace, particularly a furnace for resistance operation, with a furnace lid (14), comprising:
a first, upper clamping ring (4) and a second, lower clamping ring (5), wherein the clamping rings (4, 5) can, for holding the electrode (2), be clamped around this and, for freeing the electrode (2), released therefrom,
adjusting cylinders (6, 7) for moving the first clamping ring (4) relative to the second clamping ring (5) through a compensating stroke and for moving the electrode (2) relative to the furnace lid (14), and
a control device (1s) for activating the first and second clamping rings (4, 5) and the adjusting cylinders (6, 7),
**characterised in that**
the control device (1s) is so programmed that the compensating stroke for the adjusting cylinders (6, 7) for movement of the first clamping ring (4) relative to the second clamping ring (5) is variable and automatically settable so that re-clamping of the first clamping ring (4) around the electrode (2) after achieving the compensating stroke takes place exclusively adjacent to the sensitive length section (2l) of the electrode (2) and not within this length section (2l).

2. Device (1) according to claim 1, **characterised in that** at least the first clamping ring (4) has at least one sensor device (11) by which markings (12), which are provided at the electrode (2), for the sensitive length section (2l) of the electrode (2) are detectable, wherein the adjusting cylinders (6, 7) can be regulated by the control device (1s) for execution of the compensating stroke in dependence on signals of the sensor device (11).

3. Device (1) according to claim 1 or 2, **characterised in that** the second clamping ring comprises at least one sensor device (11) by which markings (12), which are provided at the electrode (2), for the sensitive length section (2l) of the electrode (2) are detectable so that the control device (1s) activates the second clamping ring (5) in such a way that it holds the electrode (2) exclusively adjacent to the sensitive length section (2l) of the electrode (2) and not within this length section (2l).

4. Device (1) according to claim 2 or 3, **characterised in that** the sensor device (11) is suitable for the purpose of detecting a marking (12), which is formed optically and/or magnetically, at the electrode (2).

5. Device (1) according to any one of claims 2 to 4, **characterised in that** the sensor device (11) is suitable for the purpose of detecting a marking at the electrode (2) in the form of an annular groove (12) formed thereon.

6. Device (1) according to claim 5, **characterised in that** radiation which in a predetermined position of the electrode (2) with respect to the furnace lid (14) penetrates the annular groove (12) can be emitted by the sensor device (11).

7. Device (1) according to any one of claims 1 to 6, **characterised in that** the adjusting cylinders (6, 7) for movement of the first clamping ring (4) through the compensating stroke are actuable by the activation by means of the control device (1s) only under the condition that the adjusting cylinders (6, 7) have a predetermined stroke reserve which is greater than an axial length of the sensitive length section (2l) of the electrode (2).

8. Device (1) according to any one of claims 1 to 7, **characterised in that** the adjusting cylinders for movement of the first clamping ring (4) relative to the second clamping ring (5) are constructed as stroke cylinders (6) which are connected with the first clamping ring (4) and supported at the second clamping ring (5), and that the adjusting cylinders for movement of the electrode (2) relative to the furnace lid (14) are constructed as regulating cylinders (7) which connect the second clamping ring (5) with a frame device (3) or the like.

9. Device (1) according to claim 8, **characterised in that** simultaneously with adjustment of the stroke cylinders (6) for movement of the first clamping ring (4), which are clamped around the electrode (2), in the direction of the released second clamping ring (5) the regulating cylinders (7) are adjustable so that, a spacing of the first clamping ring (4) from the furnace lid (14) and thus the operating point of the electrode (2) remain constant within the furnace.

10. Device (1) according to any one of claims 1 to 7, **characterised in that** the adjusting cylinders for movement of the first clamping ring (4) relative to the second clamping ring (5) and for movement of the electrode (2) relative to the furnace lid (14) are formed integrally as regulating cylinders (7) which connect the first clamping ring (4) with a frame device (3).

11. Device (1) according to any one of claims 1 to 10, **characterised in that** the second, lower clamping ring (5) is arranged in stationary position in the furnace lid (14) or adjacent to the furnace lid (14).

12. Electrode (2) for use in a metallurgical furnace, which electrode consists of A plurality of electrode parts (2a, 2b), wherein mutually adjoining electrode parts (2a, 2b) are respectively connected together by a connecting point, **characterised in that** markings (12) which denote a respective connecting point between two mutually adjoining electrode parts are provided at the electrode (2) and identify this connecting point as a sensitive length section (2l) of the electrode (2), wherein the markings (12) are detectable by a sensor device of a device (1) for replenishing the electrode (2).

13. Electrode (2) according to claim 12, **characterised in that** the markings (12) are formed at at least one side of a connecting point in two adjacent and mutually parallel rows each extending transversely to the longitudinal axis of the electrode (2).

14. Device (1) according to any one of claims 1 to 11, for replenishing an electrode (2) according to one of claims 12 and 13.

15. Method for replenishing an electrode (2) of a metallurgical furnace, particularly a furnace for resistance operation, with a furnace lid (14), with use of a device (1) according to any one of claims 1 to 11 or according to claim 14, **characterised in that** the adjusting cylinders (6, 7) for movement of the first clamping ring (4) relative to the second clamping ring (5) are so regulated in dependence on the sensitive length section (2l) of the electrode (2) that a re-clamping of the first clamping ring (4) around the electrode (2) after achieving the compensating stroke takes place exclusively adjacent to the sensitive length section (2l) of the electrode (2) and not within this length section (2l).

16. Method according to claim 15, **characterised in that** the sensitive length section (2l) of the electrode (2) is provided with markings (12) which are detected by a sensor device mounted at least on the first clamping ring (4), wherein the adjusting cylinders (6, 7) for movement of the first clamping ring (4) relative to the second clamping ring (5) are regulated in dependence on the signals of the sensor device (11).

17. Method according to claim 15 or 16, **characterised in that** the adjusting cylinders (6, 7) for movement of the first clamping ring (4) relative to the second clamping ring (5) are actuated only under the condition that the adjusting cylinders (6, 7) have a predetermined stroke reserve greater than an axial length of the sensitive length section (2l) of the electrode (2).

18. Method according to any one of claims 15 to 17, **characterised in that** adjusting cylinders (6, 7) for movement of the first clamping ring (4) relative to the second clamping ring (5) are actuated when the adjusting cylinders (7) for movement of the electrode (2) have exceeded a predetermined stroke.

19. Method according to any one of claims 15 to 18, **characterised in that** the adjusting cylinders for movement of the first clamping ring (4) relative to the second clamping ring (5) are constructed as stroke cylinders (6), which are connected with the first clamping ring (4) and supported at the second clamping ring (5), and
the adjusting cylinders for movement of the electrode (2) relative to the furnace lid (14) are constructed as regulating cylinders (7), which connect the second clamping ring (5) with a frame device (3),
wherein when adjustment of the stroke cylinders (5) for movement of the first clamping ring (4), which is clamped around the electrode (2), in the direction of the released second clamping ring (5) take place the regulating cylinders (7) are adjusted at the same time so that a spacing of the first clamping ring (4) from the furnace lid (14) and thus the operating point of the electrode (2) within the furnace remain constant.

## Revendications

1. Dispositif (1) pour le chargement d'une électrode (2) présentant une partie sensible (2l) en direction longitudinale, d'un four métallurgique, en particulier d'un four à résistance, muni d'un couvercle de four (14), comprenant :
un premier collier de serrage supérieur (4) et un deuxième collier de serrage inférieur (5), les colliers de serrage (4, 5) pouvant être serrés autour de l'électrode (2) pour le maintien de cette dernière et pouvant être desserrés de l'électrode (2) pour la libération de cette dernière ;
des cylindres de déplacement (6, 7) pour le déplacement du premier collier de serrage (4) par rapport au deuxième collier de serrage (5) le long d'une course d'équilibrage et pour le déplacement de l'électrode (2) par rapport au couvercle du four (14) ; et
un mécanisme de commande (1s) pour la commande du premier et du deuxième collier de serrage (4, 5) et des cylindres de déplacement (6, 7) ;
**caractérisé en ce que** le mécanisme de commande (1s) est agencé du point de vue de la technique du programme de telle sorte que la course d'équilibrage pour les cylindres de déplacement (6, 7) à des fins de déplacement du premier collier de serrage (4) par rapport au deuxième collier de serrage (5) est variable et peut être réglée de manière automatisée, d'une manière telle qu'un serrage renouvelé du premier collier de serrage (4) autour de l'électrode (2) après avoir atteint la course d'équilibrage a lieu exclusivement en position limitrophe à la partie sensible (2l) de l'électrode (2) en direction longitudinale et non au sein de cette partie longitudinale (2l).

2. Dispositif (1) selon la revendication 1, **caractérisé en ce qu'**au moins le premier collier de serrage (4) présente au moins un mécanisme de détection (11) avec lequel on peut détecter des repères (12) prévus contre l'électrode (2) pour la partie sensible (2l) de l'électrode (2) en direction longitudinale, les cylindres de déplacement (6, 7) pouvant être réglés par le mécanisme de commande (1s) pour la mise en oeuvre de la course d'équilibrage en fonction de signaux émis par le mécanisme de détection (11).

3. Dispositif (1) selon la revendication 1 ou 2, **caractérisé en ce que** le deuxième collier de serrage présente au moins un mécanisme de détection (11) avec lequel on peut détecter des repères (12) prévus contre l'électrode (2) pour la partie sensible (2l) de l'électrode (2) en direction longitudinale, si bien que le mécanisme de commande (1s) commande le deuxième collier de serrage (5) d'une manière telle qu'il maintient l'électrode (2) exclusivement en position limitrophe à la partie sensible (2l) de l'électrode (2) en direction longitudinale et non au sein de cette partie longitudinale (2l).

4. Dispositif (1) selon la revendication 2 ou 3, **caractérisé en ce que** le mécanisme de détection (11) est approprié pour détecter un repère (12) contre l'électrode (2), qui est réalisé sous forme optique et/ou sous forme magnétique.

5. Dispositif (1) selon l'une quelconque des revendications 2 à 4, **caractérisé en ce que** le mécanisme de détection (11) est approprié pour détecter un repère sur l'électrode (2), sous la forme d'une rainure annulaire (12) réalisée contre cette dernière.

6. Dispositif (1) selon la revendication 5, **caractérisé en ce qu'**un rayonnement peut être émis par le mécanisme de détection (11), qui traverse la rainure annulaire (12) dans une position prédéterminée de l'électrode (2) par rapport au couvercle de four (14).

7. Dispositif (1) selon l'une quelconque des revendications 1 à 6, **caractérisé en ce que** les cylindres de déplacement (6, 7) pour le déplacement du premier collier de serrage (4) le long de la course d'équilibrage via la commande au moyen du mécanisme de commande (1s) ne peuvent être activés qu'à condition que les cylindres de déplacement (6, 7) disposent d'une réserve de course prédéfinie qui est supérieure à une longueur axiale de la partie sensible (2l) de l'électrode (2) en direction longitudinale.

8. Dispositif (1) selon l'une quelconque des revendications 1 à 7, **caractérisé en ce que** les cylindres de déplacement pour le déplacement du premier collier de serrage (4) par rapport au deuxième collier de serrage (5) sont réalisés sous la forme de cylindres de levage (6) qui sont reliés au premier collier de serrage (4) et qui s'appuient contre le deuxième collier de serrage (5), et **en ce que** les cylindres de déplacement pour le déplacement de l'électrode (2) par rapport au couvercle de four (14) sont réalisés sous la forme de cylindres de régulation (7) qui relient le deuxième collier de serrage (5) à un mécanisme (3) faisant office d'encadrement ou analogue.

9. Dispositif (1) selon la revendication 8, **caractérisé en ce que**, de manière simultanée avec un déplacement des cylindres de levage (6) pour le déplacement du premier collier de serrage (4) serré autour de l'électrode (2) dans la direction du deuxième collier de serrage desserré (5), on peut déplacer les cylindres de régulation (7) d'une manière telle qu'une distance entre le premier collier de serrage (4) et le couvercle de four (14) et par conséquent le point de fonctionnement de l'électrode (2) à l'intérieur du four reste constante.

10. Dispositif (1) selon l'une quelconque des revendications 1 à 7, **caractérisé en ce que** les cylindres de déplacement, pour le déplacement du premier collier de serrage (4) par rapport au deuxième collier de serrage (5) et pour le déplacement de l'électrode (2) par rapport au couvercle de four (14) sont réalisés en une seule pièce sous la forme de cylindres de régulation (7) qui relient le premier collier de serrage (4) à un mécanisme (3) faisant office d'encadrement.

11. Dispositif (1) selon l'une quelconque des revendications 1 à 10, **caractérisé en ce que** le deuxième collier de serrage inférieur (5) est disposé à demeure dans le couvercle de four (14) ou en position limitrophe au couvercle de four (14).

12. Électrode (2) pour son utilisation dans un four métallurgique, qui est constituée d'une multitude de parties d'électrode (2a, 2b), des parties d'électrode (2a, 2b) réciproquement adjacentes étant reliées les unes aux autres respectivement par un endroit de liaison, des repères (12) étant prévus contre l'électrode (2), qui caractérisent un endroit de liaison respectif entre deux parties d'électrodes réciproquement adjacentes, **caractérisée en ce que** les repères qui sont prévus contre l'électrode (2) présentent un endroit de liaison respectif entre deux parties d'électrode réciproquement adjacentes faisant office de partie sensible (2l) de l'électrode (2) en direction longitudinale, les repères (12) pouvant être détectés par un mécanisme de détection d'un dispositif (1) pour le chargement de l'électrode (2) ; et
**en ce que** les repères (12) sont réalisés sous la forme de moyens optiques, en particulier sous la forme de moyens colorés et/ou luminescents, qui forment un contraste par rapport à la surface de l'électrode (2) ; et/ou en ce que les repères (12) sont magnétiques ou magnétisables ; et/ou
**en ce que** les repères sont réalisés via un façonnement de l'électrode (2) dans sa zone marginale, en particulier via une rainure annulaire (12) qui s'étend en direction transversale par rapport à l'axe longitudinal de l'électrode (2).

13. Électrode (2) selon la revendication 12, **caractérisée en ce que** les repères (12) sont réalisés sur au moins un côté d'un endroit de liaison en deux séries voisines et parallèles l'une à l'autre qui s'étendent respectivement en direction transversale par rapport à l'axe longitudinal de l'électrode (2).

14. Dispositif (1) selon l'une quelconque des revendications 1 à 11 pour le chargement d'une électrode (2) selon l'une quelconque des revendications 12 ou 13.

15. Procédé pour le chargement d'une électrode (2) d'un four métallurgique, en particulier d'un four à résistance, comprenant un couvercle de four (14), en utilisant un dispositif (1) selon l'une quelconque des revendications 1 à 11 ou selon la revendication 14, **caractérisé en ce que**
les cylindres de déplacement (6, 7) pour le déplacement du premier collier de serrage (4) par rapport au deuxième collier de serrage (5) sont commandés, en fonction de la partie sensible (21) de l'électrode (2) en direction longitudinale d'une manière telle qu'un serrage renouvelé du premier collier de serrage (4) autour de l'électrode (2) après avoir atteint la course d'équilibrage a lieu exclusivement en position limitrophe à la partie sensible (2l) de l'électrode (2) en direction longitudinale et non au sein de cette partie longitudinale (2l).

16. Procédé selon la revendication 15, **caractérisé en ce que** la partie sensible (2l) de l'électrode (2) en direction longitudinale est muni de repères (12) qui sont détectés par un mécanisme de détection appliqué au moins contre le premier collier de serrage (4), les cylindres de déplacement (6, 7) pour le déplacement du premier collier de serrage (4) par rapport au deuxième collier de serrage (5) étant commandés en fonction des signaux du mécanisme de détection (11).

17. Procédé selon la revendication 15 ou 16, **caractérisé en ce que** les cylindres de déplacement (6, 7) pour le déplacement du premier collier de serrage (4) par rapport au deuxième collier de serrage (5) ne peuvent être activés qu'à condition que les cylindres de déplacement (6, 7) disposent d'une réserve de course prédéfinie qui est supérieure à une longueur axiale de la partie sensible (2l) de l'électrode (2) en direction longitudinale.

18. Procédé selon l'une quelconque des revendications 15 à 17, **caractérisé en ce que** les cylindres de déplacement (6, 7) pour le déplacement du premier collier de serrage (4) par rapport au deuxième collier de serrage (5) sont activés lorsque les cylindres de déplacement (7) pour le déplacement de l'électrode (2) ont dépassé une course prédéfinie.

19. Procédé selon l'une quelconque des revendications 15 à 18, **caractérisé en ce que**
les cylindres de déplacement pour le déplacement du premier collier de serrage (4) par rapport au deuxième collier de serrage (5) sont réalisés sous la forme de cylindres de levage (6) qui sont reliés au premier collier de serrage (4) et qui s'appuient contre le deuxième collier de serrage (5), et
**en ce que en ce que** les cylindres de déplacement pour le déplacement de l'électrode (2) par rapport au couvercle de four (14) sont réalisés sous la forme de cylindres de régulation (7) qui relient le deuxième collier de serrage (5) à un mécanisme (3) faisant office d'encadrement ;
les cylindres de régulation (7) se déplaçant de manière simultanée au déplacement des cylindres de levage (6) pour le déplacement du premier collier de serrage (4) serré autour de l'électrode (2) dans la direction du deuxième collier de serrage desserré (5), d'une manière telle qu'une distance entre le premier collier de serrage (4) et le couvercle de four (14) et par conséquent le point de fonctionnement de l'électrode (2) à l'intérieur du four reste constante.
